# EUROPEAN PATENT APPLICATION

(11) **EP 3 883 134 A1**
(43) Date of publication of application: **22.09.2021**
(21) Application number: 19883899.7
(22) Date of filing: 22.04.2019
(51) Int. Cl.: H04B 3/04, H04B 3/54, H04B 10/2575

(54) **SIGNAL PROCESSING APPARATUS AND METHOD FOR REALIZING SIGNAL SCHEDULING**

(30) Priority: 16.11.2018 CN 201811368518
(71) Applicant: ZTE Corporation, shenzhen Guangdong 518057 (CN)
(72) Inventor: LIU, Xiaofeng, Shenzhen, Guangdong 518057 (CN); PENG, Lin, Shenzhen, Guangdong 518057 (CN); ZHAN, Chuanhan, Shenzhen, Guangdong 518057 (CN); LI, Xiangyang, Shenzhen, Guangdong 518057 (CN); BI, Wenzhong, Shenzhen, Guangdong 518057 (CN)
(74) Representative: Canzler & Bergmeier Patentanwälte Partnerschaft mbB
(86) International application number: PCT/CN2019/083702
(87) International publication number: WO 2020/098224

(57) **Abstract**

Disclosed are a signal processing apparatus and a method for realizing signal scheduling. In the present application, during a transmission process of a single line transmission signal, the signal is transmitted by means of a single line transmission cable instead of an air medium, and during the transmission of the single line transmission signal, processes, such as conversion, amplification and detour, are selectively performed on the single line transmission signal according to a determination condition of a signal feature.

## Description

### CROSS-REFERENCE TO RELATED APPLICATION

The present application is based on and claims a priority from the Chinese patent application No. 201811368518.5 filed on November 16, 2018, the entire disclosure of which is hereby incorporated by reference.

### TECHNICAL FIELD

The present application relates to, but is not limited to, wireless communication technologies, and in particular relates to a signal processing apparatus and a method for implementing signal scheduling.

### BACKGROUND

In recent years, China's urban and inter-urban traffic systems, such as bullet trains and high-speed railways, have been developed at a rapid pace. In general, China's high-speed railways have reached a speed of more than 250 kilometers per hour (Km/h), where the latest "Fuxing" high-speed train may reach a maximum running speed of 350Km/h. In the future, the high-speed train may reach a speed up to 600 Km/h. Although the increased speed of the vehicle brings convenience for living trip, it also poses challenges to communication services.

The communication signal coverage scheme used in China's urban and inter-urban traffic systems mainly takes a form of cellular network base station chain coverage, which mainly includes traditional base stations, base station + satellite dual backhaul schemes, private network coverage, vehicle-mounted Wireless-Fidelity (WiFi) systems, and the like.

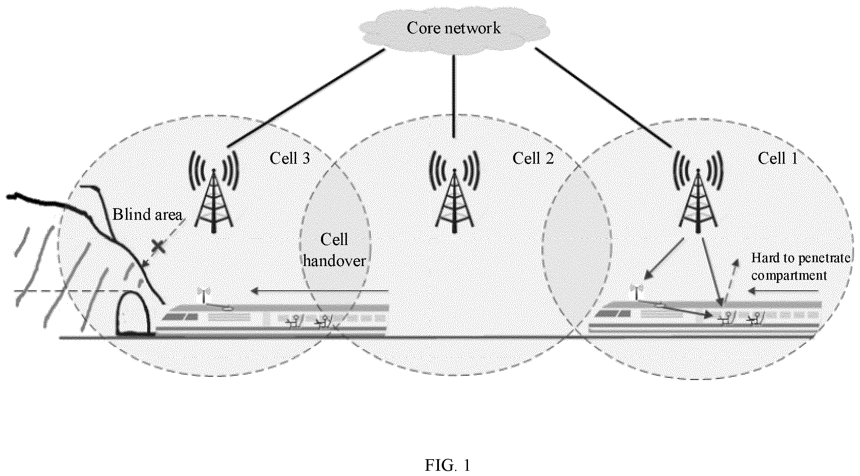

FIG 1 is a schematic diagram of the cellular network base station chain coverage scheme in the related art. As shown in FIG 1, the cellular network base station chain coverage scheme uses base stations to establish communication cells along a train path, and signals transmitted from a core network to the communication base stations implement coverage in the communication cells established by the base stations. While the train is moving, a user terminal directly receives signals from a base station and performs handover according to a communication cell in which the user terminal is located. In addition, private network coverage inside a compartment may be implemented by receiving signals from the base station via a vehicle-mounted antenna. However, in practical use, the cellular network base station chain coverage scheme has the following problems. On one hand, cell handover is frequent. Especially as the running speed of the train increases, a conventional cellular network base station chain coverage scheme will require more frequent handover between cells. For example, while moving, the train of FIG 1 requires handover among the cells in the base station shown in FIG 1 continuously. Once the switching fails, the signal quality will deteriorate greatly, which may cause phenomena such as call drop and network disconnection. On the other hand, in order to realize good signal coverage, communication base stations are required to be erected along the path with an increased density, which directly leads to increased cost and complexity of the construction scenario. Moreover, the communication base stations cannot completely cover "blind areas" affecting signal coverage, such as tunnels, bridges, and remote areas. Therefore, there are unavoidable signal blind areas, which also pose greater challenges to further improvement of the cellular network base station chain coverage scheme.

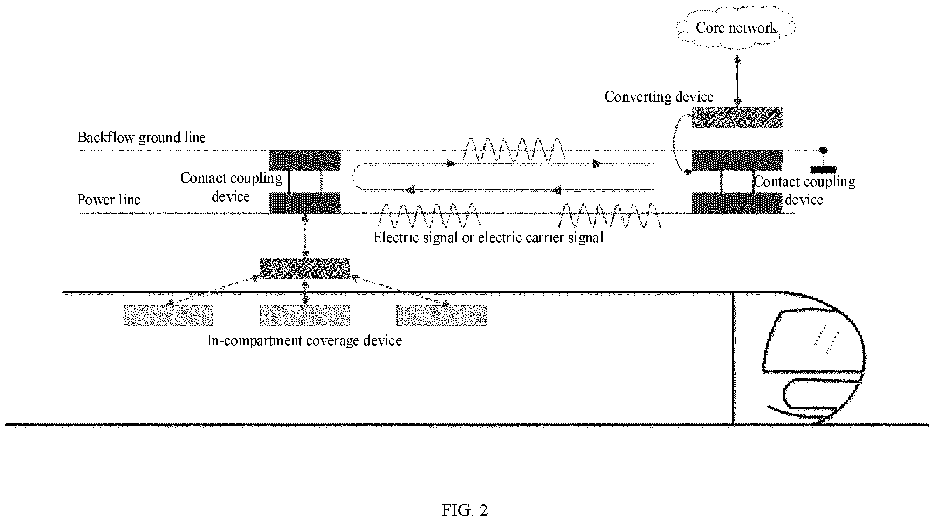

In the related art, a train wireless coverage system based on power line carrier communication (PLC) technology is provided, as shown in FIG 2, in the PLC-based train wireless coverage system, a communication signal obtained by a core network is converted into an electric signal or electric carrier signal by a conversion device, and the electric signal or electric carrier signal is transmitted and returned in a two-wire structure consisting of a power line and a backflow ground line in a train traveling direction. While the train is moving, the electric signal or electric carrier signal is converted into a radio frequency signal or baseband signal by a vehicle-mounted receiving and converting device, and then signal interaction with a user terminal is realized by a coverage device in the compartment. However, on one hand, the PLC-based train wireless coverage system requires a "two-wire" structure supporting backflow, that is, while a power line is required as a transmission medium, backflow from a "reference ground" is also required. However, in most train operation scenarios, few power lines are close to a "reference ground" to support implementation of the PLC technology. Therefore, the application scenarios of the PLC-based train wireless coverage system are limited. On the other hand, PLC is mostly applied to a lower frequency, such as about 90 megahertz (MHz), where the attenuation reaches several decibels (dB) per meter, and at a higher frequency, the attenuation will also increase, which makes it not suitable for high frequency long-distance transmission. Therefore, the PLC-based train wireless coverage system has a small working frequency range and a narrow transmission bandwidth. With the development of the communication industry, the fifth generation mobile communication technology (5G) has proposed requirements for a higher frequency, a higher speed and a higher bandwidth, which obviously cannot meet by the PLC technology.

### SUMMARY

In embodiments of the present application, there is provided a signal processing apparatus and a method for implementing signal scheduling.

In an embodiment of the present application, there is provided a signal processing apparatus, including: a coupling module, a scheduling module, a first processing module, a second processing module, a third processing module and a control module; wherein the coupling module is configured to acquire a single wire transmission signal, and feed a processed single wire transmission signal into a single wire transmission line for transmission; the scheduling module is configured to determine a processing mode according to the acquired single wire transmission signal and send a notification to the control module to control a corresponding processing module to perform a processing; the first processing module is configured to perform signal conversion on the single wire transmission signal according to the control of the control module; the second processing module is configured to perform signal amplification on the single wire transmission signal according to the control of the control module; the third processing module is configured to perform signal detour on the single wire transmission signal according to the control of the control module; and the control module is configured to control the corresponding processing module according to the notification from the scheduling module.

In an embodiment of the present application, there is further provided a signal processing apparatus, including: a coupling module and a first processing module; wherein the coupling module is configured to acquire a single wire transmission signal, and feed a processed single wire transmission signal into a single wire transmission line for transmission; and the first processing module is configured to perform signal conversion on the single wire transmission signal, or receive a communication signal from a communication node and perform signal conversion on the received communication signal.

In an embodiment of the present application, there is further provided a signal processing apparatus, including: a coupling module and a second processing module; wherein the coupling module is configured to acquire a single wire transmission signal, and feed a processed single wire transmission signal into a single wire transmission line for transmission; and the second processing module is configured to perform signal amplification on the single wire transmission signal.

In an embodiment of the present application, there is further provided a signal processing apparatus, including: a coupling module and a third processing module; wherein the coupling module is configured to acquire a single wire transmission signal, and feed a processed single wire transmission signal into a single wire transmission line for transmission; and the third processing module is configured to perform signal detour on the single wire transmission signal.

In an embodiment of the present application, there is further provided a method for implementing signal scheduling, including: determining, during a transmission process of a single wire transmission signal, to perform signal conversion, signal amplification or signal detour on the single wire transmission signal according to the acquired single wire transmission signal.

According to the embodiments of the present application, the transmission process of the single wire transmission signal is implemented by means of a single wire transmission line instead of an air medium, and, during the transmission of the single wire transmission signal, processes, such as conversion, amplification and detour, are selectively performed on the single wire transmission signal according to determination of a signal feature, thereby ensuring the quality of the transmission signal. Further, base stations are not necessarily to be arranged along the transmission path, which greatly reduce the construction difficulty and cost.

Other features and advantages of the present application will be set forth in the description which follows, and will become apparent from the description at least partially, or be understood by implementing the present application. Objects and other advantages of the present application may be realized and obtained by means of the structures particularly pointed out in the description, appended claims and drawings.

### BRIEF DESCRIPTION OF THE DRAWINGS

Accompanying drawings are provided for further understanding of the technical solution of the present application and constitute a part of the specification. Hereinafter, these drawings are intended to explain the technical solution of the present application together with the following embodiments. In the drawings,
FIG. 1 is a schematic diagram of a cellular network base station chain coverage scheme in the related art;
FIG. 2 is a schematic diagram of a PLC-based train wireless coverage system in the related art;
FIG. 3 is a flowchart of a method for implementing signal scheduling according to the present application;
FIG. 4 is a schematic diagram showing component structure of a signal processing apparatus according to the present application;
FIG. 5 is a schematic diagram showing component structure of a signal processing apparatus according to the present application;
FIG. 6 is a schematic structural diagram showing an implementation of a coupling form according to the present application;
FIG. 7 is a schematic diagram showing component structure of a first processing module according to the present application;
FIG. 8A is a schematic diagram of a first implementation of a conversion unit in the first processing module according to the present application;
FIG. 8B is a schematic diagram of a second implementation of a conversion unit in the first processing module according to the present application;
FIG. 8C is a schematic diagram of a third implementation of a conversion unit in the first processing module according to the present application;
FIG. 8D is a schematic diagram of a first implementation of a signal transmission mode according to the present application;
FIG. 8E is a schematic diagram of a second implementation of a signal transmission mode according to the present application;
FIG. 8F is a schematic diagram of a third implementation of a signal transmission mode according to the present application;
FIG. 9 is a schematic block diagram showing component structure of a second processing module according to the present application;
FIG. 10 is a schematic block diagram showing component structures of an amplifier in the second processing module according to the present application;
FIG. 11 is a schematic diagram showing component structure of a third processing module according to the present application;
FIG. 12 is a schematic diagram showing a signal scheduling module implementing scheduling according to the present application;
FIG. 13 is a schematic diagram of a signal processing apparatus according to the present application applied in a high-speed train scenario;
FIG. 14 is a schematic diagram of a repeater setting different operating modes on a single wire transmission line according to the present application;
FIG. 15 is a schematic diagram of a repeater setting different operating modes on a single wire transmission line according to the present application;
FIG. 16 is a schematic diagram showing an amplifier implementing signal processing according to the present application;
FIG. 17 is a schematic diagram showing emergency handling of a large obstacle detour or source signal fault according to the present application;
FIG. 18 is a schematic diagram of a specific application layout of the signal processing apparatus according to the present application;
FIG. 19 is a schematic diagram of the signal processing apparatus according to the present application;
FIG. 20 is a schematic diagram of the signal processing apparatus according to the present application;
FIG. 21 is a schematic diagram of the signal processing apparatus according to the present application;
FIG. 22 is a schematic diagram of the signal processing apparatus according to the present application; and
FIG. 23 is a schematic diagram of the signal processing apparatus according to the present application.

### DETAILED DESCRIPTION

For clarity and better understanding of the objects, technical solution and advantages of the present application, embodiments of the present application will now be described in detail in conjunction with the accompanying drawings. It should be noted that the embodiments of the present application and features therein may be combined with each other in any manner as long as they are not contradictory.

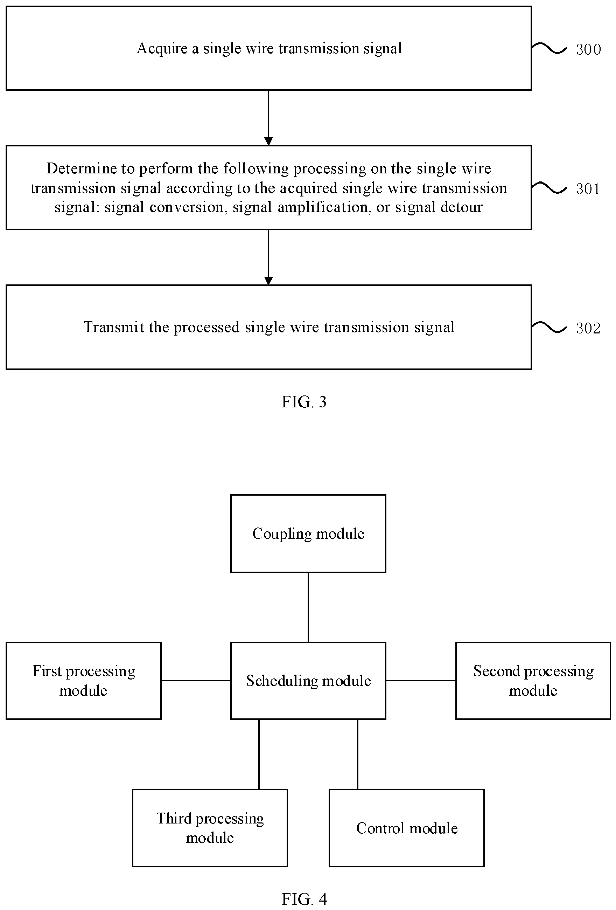

The method for implementing signal scheduling in the present application includes: determining, during a transmission process of a single wire transmission signal, to perform signal conversion, signal amplification or signal detour on the single wire transmission signal according to the acquired single wire transmission signal. FIG. 3 is a flowchart of a method for implementing signal scheduling according to the present application. As shown in FIG. 3, the method includes steps 300 to 302.

At step 300, acquiring a single wire transmission signal.

Here, before the step 300, the method may further include: converting a communication signal from a communication node (also referred to as "an original signal mode" herein) into a single wire transmission signal supporting transmission in a single wire transmission line (also referred to as "an in-wire transmission mode" herein), and coupling the single wire transmission signal to a single wire transmission line for transmission.

In an exemplary example, at a start, i.e., a head communication node, or an end, i.e., a tail communication node, of the single wire transmission line, a source communication signal of the original signal mode from a communication node is received. Then, the source communication signal is converted into a single wire transmission signal of the in-wire transmission mode supporting transmission in a single wire transmission line, and the single wire transmission signal is fed into a single wire transmission line for transmission.

In an exemplary example, the communication node may include a baseband device, a base station device, and the like.

In an exemplary example, the communication node may include a baseband device, a base station device arranged along or near a train travel route.

In an exemplary example, an operator core network provides the required communication signals, which arrive at the communication node via an associated connection device.

In an exemplary example, the step of coupling the single wire transmission signal to the single wire transmission line for transmission may include: coupling and adapting the single wire transmission signal supporting transmission in a single wire transmission line obtained by conversion to match a line type of the single wire transmission line; and transmitting the coupled and adapted single wire transmission signal through the single wire transmission line.

In an exemplary example, the step of acquiring the single wire transmission signal may include: acquiring the single wire transmission signal by coupling from the single wire transmission line.

In an exemplary example, the single wire transmission line includes, but is not limited to: a traditional power line, pure metal line, metal core + dielectric sheath or pure dielectric line, and the like.

According to practical application requirements, a frequency of the single wire transmission signal may support frequency bands of microwave-millimeter waves, which greatly expand the signal transmission bandwidth to up to several GHz. The modulated signal in the single wire transmission is in a form of electromagnetic waves and has a certain radiation field, thereby supporting non-contact signal feeding or receiving.

In an exemplary example, the single wire transmission signal includes a surface wave transmission signal.

The surface wave transmission signal is in a form of high-frequency electromagnetic waves, and has good directivity during transmission. Thereby, in the present application, the transmission mode of signal feeding or receiving is easy to implement and has less loss.

In an exemplary example, before the step of determining to perform processing on the single wire transmission signal according to the acquired single wire transmission signal, the method may further include: manually presetting the processing to a processing mode including any one of signal conversion, signal amplification and signal detour.

At step 301, determining to perform the following processing on the single wire transmission signal according to the acquired single wire transmission signal: signal conversion, signal amplification, or signal detour.

In an exemplary example, signal feature information of the single wire transmission signal may be obtained according to the acquired single wire transmission signal. The signal feature information includes, for example: a transmission mode (e.g., an in-wire transmission mode of the single wire transmission signal supporting transmission in a single wire transmission line, or an original signal mode of the communication signal at the communication node), a standing-wave ratio, signal amplitude, channel flatness, out-of-band rejection, etc.

In an exemplary example, when a power or signal feature (e.g., amplitude) of the acquired single wire transmission signal does not meet a preset requirement, for example, when the amplitude of the signal is lower than a set amplitude threshold, the acquired single wire transmission signal is amplified or compensated to ensure that the feature of the single wire transmission signal in the single wire transmission line keep consistent.

In an exemplary example, when a strong reflection signal is detected in the single wire transmission signal, i.e., when a standing wave is poor, it can be determined that there is an obstacle blocking transmission of the signal, so the acquired single wire transmission signal makes a detour to be transmitted through a preset communication path, which is equivalent to a process of "coupling and re-feeding".

In an exemplary example, when it is known that the acquired single wire transmission signal will have a poor signal quality or will be interrupted, the acquired single wire transmission signal makes a detour to be transmitted through a preset communication path, which is equivalent to a process of "coupling and re-feeding". For example, before encountering a small obstacle, the single wire transmission signal is acquired from the single wire transmission line by coupling and then directly transmitted through the preset communication path; and after the single wire transmission signal has bypassed the obstacle, the single wire transmission signal is fed into the single wire transmission line again by coupling to continue the transmission. At this time, investigations need to be conducted in advance to learn about obstacles on the single wire transmission line, and the acquired single wire transmission information is subjected to a processing of signal detour before encountering these obstacles, so as to avoid interferences of the obstacles on the signal.

In an exemplary example, when the single wire transmission signal reaches a receiving device, such as a vehicle-mounted station, signal conversion is performed on the single wire transmission signal to convert the single wire transmission signal into a communication signal of the original signal mode; and the converted communication signal is transmitted to the receiving device, such as a vehicle-mounted station to perform signal coverage through a signal coverage system to which the receiving device belongs, such as perform signal coverage within a compartment by using an indoor distributed coverage system in the compartment.

In an exemplary example, the step 301 may further include: receiving, when a large obstacle or a source communication signal fault occurs, for example, a source communication signal of the head communication node or the tail communication node has a fault or a large-scale cutoff occurs in the single wire transmission line, a communication signal from a nearby or standby communication node, converting the received communication signal into a single wire transmission signal supporting transmission in a single wire transmission line, and coupling the single wire transmission signal to the single wire transmission line for transmission. In this manner, the nearby or standby communication node is conveniently utilized to carry out emergency handling and large-scale obstacle avoidance regarding large obstacles or source communication signal faults, thereby ensuring reliability of the single wire transmission signal.

According to the present application, the transmission process of the single wire transmission signal is implemented by means of the single wire transmission line instead of an air medium, and, during transmission of the single wire transmission signal, processes, such as conversion, amplification and detour, may be performed on the single wire transmission signal. There is no need to arrange base stations along the transmission path, which greatly reduce the construction difficulty and cost.

In an exemplary example, taking a scenario of a running high-speed train as an example, on a premise that a relative position between a following cable, such as a single wire transmission line, and the train remains substantially unchanged, by adopting the signal processing method of the present application, the "blind area" of communication coverage is eliminated, and the communication signal coverage is not limited by the running speed of the high-speed train and the operation scenario anymore; and the single wire transmission of the present application is used as a medium to support signal transmission and return, which enables the signal processing mode of the present application to better adapt to more application scenarios.

In an exemplary example, before the step of determining to perform processing on the single wire transmission signal according to the acquired single wire transmission signal, the method may further include: switching, according to the signal feature of the acquired single wire transmission signal, into a processing mode including one of signal conversion, signal amplification and signal detour.

At step 302, further transmitting the processed single wire transmission signal.

In an exemplary example, before the step of further transmitting the processed single wire transmission signal, the method may further include: adjusting coupling information, such as a coupling degree, according to the acquired single wire transmission signal so that the processed single wire transmission signal can be normally fed into the single wire transmission line for transmission.

In an exemplary example, this step may include: feeding the processed single wire transmission signal into a single wire transmission line by coupling for transmission.

In an exemplary example, taking the scenario of a running high-speed train as an example, the method of the present application may further include: acquiring, on one hand, the single wire transmission signal by coupling from the single wire transmission line, converting the single wire transmission signal into a communication signal at a communication node; and transmitting the converted communication signal to a receiving device, such as a vehicle-mounted station, and performing signal coverage within a compartment by using an indoor distributed coverage system in the compartment; acquiring, on the other hand, a communication signal uploaded from a terminal in the compartment by the vehicle-mounted station, converting the communication signal from the vehicle-mounted station into a single wire transmission signal supporting transmission in a single wire transmission line, and coupling the single wire transmission signal to a single wire transmission line for transmission; and then converting the single wire transmission signal into a communication signal at the communication node, and feeding the signal back to the communication node.

In order to implement the signal processing method according to the present application, the present application further provides a signal processing apparatus which, as shown in FIG. 4, includes: a coupling module, a scheduling module, a first processing module, a second processing module, a third processing module and a control module.

The coupling module is configured to acquire a single wire transmission signal, and feed a processed single wire transmission signal into a single wire transmission line for transmission.

The scheduling module is configured to determine a processing mode according to the acquired single wire transmission signal and send a notification to the control module to control a corresponding processing module to perform a processing.

The first processing module is configured to perform signal conversion on the single wire transmission signal according to the control of the control module.

The second processing module is configured to perform signal amplification on the single wire transmission signal according to the control of the control module.

The third processing module is configured to perform signal detour on the single wire transmission signal according to the control of the control module.

The control module is configured to control the corresponding processing module according to the notification from the scheduling module.

In an exemplary example, the scheduling module is configured to: determine, when a power or signal feature of the acquired single wire transmission signal does not meet a preset requirement, that the processing mode is signal amplification, and send a notification to the control module to control the second processing module; determine, when a strong reflection signal is detected in the single wire transmission signal, that the processing mode is signal detour, and send a notification to the control module to control the third processing module; and determine, when the single wire transmission signal reaches a receiving device, the processing mode is signal conversion, and send a notification to the control module to control the first processing module.

In an exemplary example, the scheduling module is further configured to: determine coupling information, such as a coupling degree, of the coupling module according to the acquired single wire transmission signal, and notify the control module of the determined coupling information; and the control module is further configured to: control the coupling module to adjust the coupling information to the currently determined coupling information.

In an exemplary example, the first processing module is further configured to: converting a communication signal from a communication node (i.e., an original signal mode) into a single wire transmission signal supporting transmission in a single wire transmission line (i.e., an in-wire transmission mode); and accordingly, the coupling module couples the single wire transmission signal to a single wire transmission line for transmission.

In an exemplary example, the single wire transmission line includes, but is not limited to: a traditional power line, pure metal line, metal core + dielectric sheath or pure dielectric line, and the like.

In an exemplary example, the single wire transmission information includes a surface wave transmission signal.

In an exemplary example, the first processing module is further configured to: receive, when a large obstacle or a source communication signal fault occurs, for example, a source communication signal of the head communication node or the tail communication node has a fault or a large-scale cutoff occurs in the single wire transmission line, a communication signal from a nearby or standby communication node, convert the received communication signal into a single wire transmission signal supporting transmission in a single wire transmission line, and couple the single wire transmission signal to the single wire transmission line for transmission.

In an exemplary example, the second processing module is configured to: amplify or compensate the acquired single wire transmission signal when a power or signal feature (e.g., amplitude) of the acquired single wire transmission signal does not meet a preset requirement, for example, when the amplitude of the signal is lower than a set amplitude threshold, so as to ensure that the feature of the single wire transmission signal in the single wire transmission line keep consistent.

In an exemplary example, the third processing module is configured to: determine that there is an obstacle blocking transmission of the signal when a strong reflection signal is detected in the single wire transmission signal, i.e., when a standing wave is poor, so the acquired single wire transmission signal makes a detour to be transmitted through a preset communication path, which is equivalent to a process of "coupling and re-feeding". Alternatively, when it is known that the acquired single wire transmission signal will have a poor signal quality or will be interrupted, the acquired single wire transmission signal makes a detour to be transmitted through a preset communication path, which is equivalent to a process of "coupling and re-feeding".

In the present application, there is further provided a signal processing apparatus with a single function, which includes at least the coupling module and the first processing module as shown in FIG. 4. Such a signal processing apparatus with a single function may be provided at a head communication node, a tail communication node, or a standby communication node of a single wire transmission lien or nearby communication nodes of some single wire transmission lines designated in advance, and is mainly configured for conversion between an original signal mode and an in-wire transmission mode. In an exemplary example, the signal processing apparatus may further include the scheduling module and the control module. The scheduling module is configured to determine coupling information of the coupling module according to the acquired single wire transmission signal, and notify the control module of the determined coupling information. The control module is configured to control the coupling module to adjust the coupling information to the determined coupling information.

In the present application, there is further provided a signal processing apparatus with a single function, which includes at least the coupling module and the second processing module as shown in FIG. 4. Such a signal processing apparatus with a single function may be provided at a designated line of the single wire transmission line, or provided according to a preset layout strategy, for example, arranging such signal processing apparatuses including only the function of the second processing module at preset intervals, and is mainly configured to perform processing including amplification/compensation or the like on the transmitted signal. In an exemplary example, the signal processing apparatus may further include the scheduling module and the control module. The scheduling module is configured to determine coupling information of the coupling module according to the acquired single wire transmission signal, and notify the control module of the determined coupling information. The control module is configured to control the coupling module to adjust the coupling information to the determined coupling information.

In the present application, there is further provided a signal processing apparatus with a single function, which includes at least the coupling module and the third processing module as shown in FIG. 4. Such a signal processing apparatus with a single function may be provided on a section of the transmission line with an obstacle that is known in advance by investigation, and is mainly configured to detour the transmitted signal to avoid the obstacle and perform direct transmission. In an exemplary example, the signal processing apparatus may further include the scheduling module and the control module. The scheduling module is configured to determine coupling information of the coupling module according to the acquired single wire transmission signal, and notify the control module of the determined coupling information. The control module is configured to control the coupling module to adjust the coupling information to the determined coupling information.

In the present application, there is further provided a signal processing apparatus, including at least the coupling module, the scheduling module and the control module as shown in FIG. 4. The signal processing apparatus may be provided on a transmission line having two or more of the signal processing apparatuses with a single function, and is mainly configured to perform corresponding selections and switching of different signal processing apparatuses with a single function according to the transmission signal in the transmission line. In an exemplary example, the scheduling module in such a signal processing apparatus is further configured to: determine coupling information of the coupling module according to the acquired single wire transmission signal, and notify the control module of the determined coupling information; and the control module is further configured to: control the coupling module to adjust the coupling information to the determined coupling information.

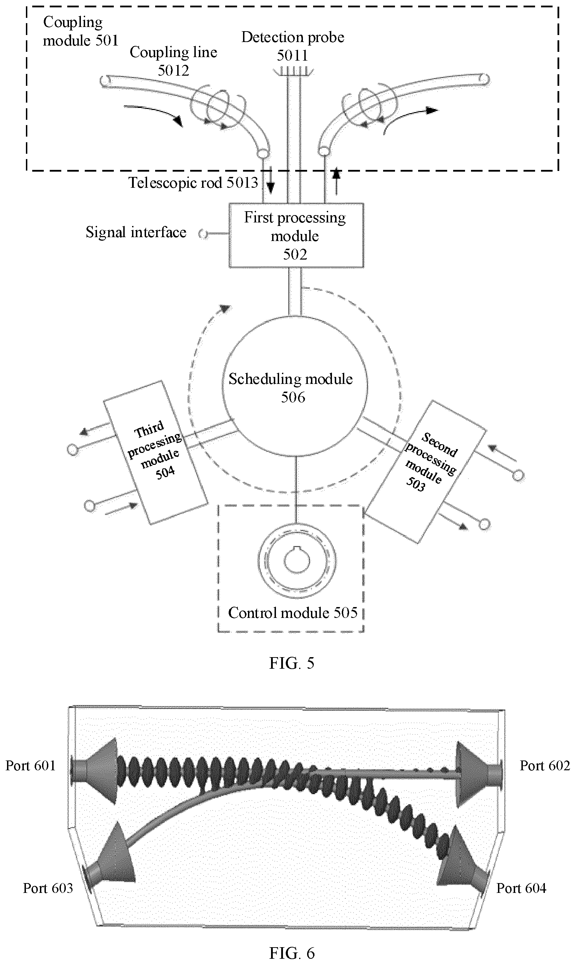

FIG. 5 is a schematic diagram showing component structure of a signal processing apparatus according to the present application. As shown in FIG. 5, the signal processing apparatus includes: a coupling module 501, a first processing module 502, a second processing module 503, a third processing module 504, a control module 505, and a scheduling module 506. In an exemplary example, the coupling module 501 configured to receive and feed energy may include: a detection probe 5011, a coupling line 5012, and a driving device, such as a telescopic rod 5013. The coupling line 5012 is configured to receive and transmit signals, the telescopic rod 5013 is configured to control a coupling degree and perform standing wave adjustment between the coupling lines, and the detection probe 5011 is configured to detect a signal feature of the single wire transmission signal transmitted in the single wire transmission line, so as to facilitate control of the scheduling module on the coupling information and selection of the three processing modules.

In an exemplary example, the detection probe may be regarded as a small coupling device with a fixed coupling degree, which may be in a form of wire coupling or a probe.

In the embodiments of the present application, the coupling module always appears in pairs with the first processing module, the second processing module, and the third processing module. That is, before a different kind of signal processing is implemented at each time, the coupling module is required to couple the single wire transmission signal from the single wire transmission line, and after the single wire transmission signal is processed, feed the processed single wire transmission signal into the single wire transmission line for transmission.

FIG. 6 is a schematic structural diagram showing an implementation of a coupling form according to the present application. This is a simple, low-cost, high-efficiency, and controllable line coupling form. As shown in FIG. 6, all or most signals entering a port 601 can be coupled and transmitted to a port 604; and little or no energy reaches a pass-through port 602 and a reverse port 603. In the present application, a coupling degree may be controlled by controlling a relative distance, angle, etc. between the coupling line and the single wire transmission line so that the energy of signals input from the port 601 is controlled and thus the energy of signals output from the egress port 604 is controlled. It should be noted that FIG. 6 is merely a simple and effective implementation of the coupling form, and is not intended to limit the scope of the present application.

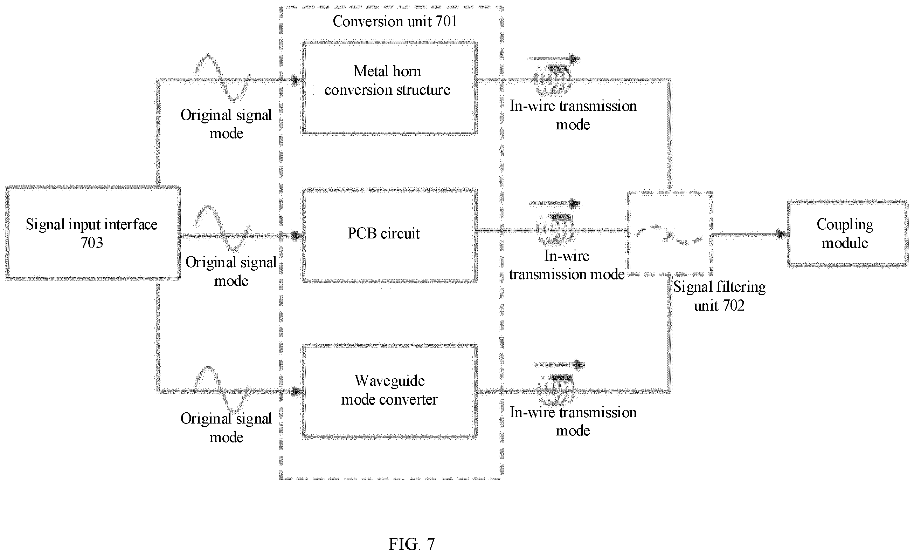

In an exemplary example, FIG. 7 is a schematic diagram showing component structure of a first processing module according to the present application. As shown in FIG. 7, the first processing module 502, which is configured for conversion between the original signal mode and the in-wire transmission mode, may include: a conversion unit 701, a signal filtering unit 702 and a signal input interface 703 specific to the present application.

The signal filtering unit 702 is configured to filter the converted transmission signal to obtain a relatively pure transmission signal that is easy to transmit and receive.

The signal input interface 703 receives a signal from a communication node. The communication node may be, for example, a head signal source base station located at a start of the single wire transmission line, or a tail signal source base station located at an end of the single wire transmission line, or a midway base station or standby base station of the single wire transmission, etc.

The conversion unit 701 may be implemented by, for example: a metal horn conversion structure, a PCB circuit, a waveguide mode converter, or the like.

In an exemplary example, the metal horn conversion structure may be a horn structure having a metal inner wall. In order to realize better impedance continuity with the original signal transmission structure, a front end of the horn structure is connected with a coaxial line part, and the horn shape of the horn structure aims to realize changes in the mode and the impedance. Before passing through the horn structure, on one hand, the signal will be converted from the original signal mode transmitted in the coaxial line into a basic form of in-wire transmission mode, such as a master mode TM00 of surface wave transmission; while on the other hand, a conversion from, for example, a impedance of 50Q to a free space impedance of 377Ω for the surface wave transmission is achieved.

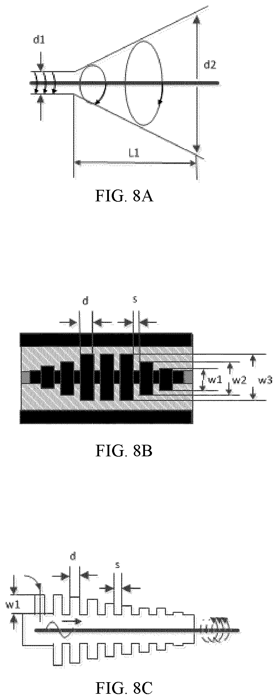

FIG. 8A is a schematic diagram of a first implementation of a conversion unit in the first processing module according to the present application. As shown in FIG. 8A, a size of the horn structure is as shown in FIG. 8A, where d1 is an outer diameter of the coaxial line, d2 is an outer diameter of the horn opening, and LI is a length of the horn structure. Generally speaking, the smaller the angle of the horn opening (relating to a ratio of d2 to L1) is, the higher the conversion efficiency will be, and the further the impedance mismatch effect will be reduced. In addition, an overall size of the horn structure is set in relation to an operating frequency of the signal, with each particular size of horn structure corresponding to a frequency range in which the conversion is most efficient. For example: for a signal of 15GHz, the horn size with a high efficiency obtained from tests is: d2=30mm, and L1=50mm, where d1 is a size suitable to a standard coaxial line. For another example: for a signal with a frequency of 3GHz, the horn size is d2=330mm and L1=180mm, where d1 is a size suitable to a standard coaxial line. It can be seen that a lower frequency requires a larger size of horn structure to achieve higher conversion efficiency.

In addition to the linear horn shown in FIG. 8A, the horn opening may be made into a more rounded gradient line shape to improve the conversion efficiency.

In an exemplary example, the PCB circuit form may be configured as a mode switch between planar circuits. FIG. 8B is a schematic diagram of a second implementation of a conversion unit in the first processing module according to the present application. As shown in FIG. 8B, a main structural feature of the PCB circuit is a groove structure with gradually increased depth and a fixed step. FIG. 8B is merely a schematic diagram. In fact, in order to ensure the efficiency of mode conversion, the groove depth has a slow variation trend, and since the step is fixed, the whole PCB circuit will be elongated. Regarding the principle and the change of the signal modes, the PCB circuit realizes changes in the transmission signal electric field through perturbation of the groove structure to the transmission electric field, thereby realizing the conversion of signal transmission modes. The impedance may also means changing from 50Ω to surface wave transmission impedance.

The structural feature of the PCB circuit is related to a frequency of the transmission signal, and in order to maintain high conversion efficiency, the PCB circuit is further customized after the signal frequency is fixed so that the signal frequency falls into the operating frequency bandwidth of the PCB circuit. In an exemplary example, for example, when the transmission signal frequency is about 4GHz, the used PCB circuit has the following sizes: a minimum groove depth of 0.5mm, a maximum groove depth of 3.5mm, and a step of 0.5 mm.

In an exemplary example, different from the horn structure, the PCB circuit may use a waveguide mode converter to realize conversions of various higher-order modes. FIG. 8C is a schematic diagram of a third implementation of a conversion unit in the first processing module of the present application. As shown in FIG. 8C, the waveguide mode converter may be configured as a section of corrugated waveguide inner wall that is transversely grooved. In order to obtain the required mode output of higher purity, structural parameters of the corrugations, including a corrugation depth w1, a corrugation width d, a gap s between the corrugations and a total length of the corrugations, may be optimized. The depth of the corrugations may be slowly reduced from one-half wavelength to one-quarter wavelength of the transmission signal.

FIGs. 8A to 8C are merely several implementations of the present application for implementing the conversion of signal transmission modes, each of which can be used for implementing the conversion between an original transmission signal mode and an in-wire transmission signal mode.

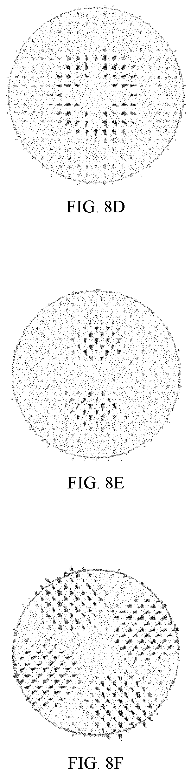

FIG. 8D is a schematic diagram of a first implementation of a signal transmission mode according to the present application. As shown in FIG 8D, the signal transmission mode may be a TM00 mode, which is a master mode of surface wave transmission in a single wire transmission line of a basic form, and may be obtained, for example, by performing conversion of the signal mode with the horn structure. FIG. 8E is a schematic diagram of a second implementation of a signal transmission mode according to the present application. As shown in FIG. 8E, the transmission mode may be a HE11 mode, which has less transmission loss than the master mode, such as TM00 mode, and good directivity, and may be used for obstacle detour, and may be generated by feeding into the horn structure or the waveguide mode converter in a differential feed manner. FIG. 8F is a schematic diagram of a third implementation of a signal transmission mode according to the present application. As shown in FIG. 8F, the signal transmission mode is a higher-order mode converted by the waveguide mode converter, which, compared with the two signal transmission modes of FIG. 8D and FIG. 8E, has less transmission loss, and can be generally applied to a specific environment.

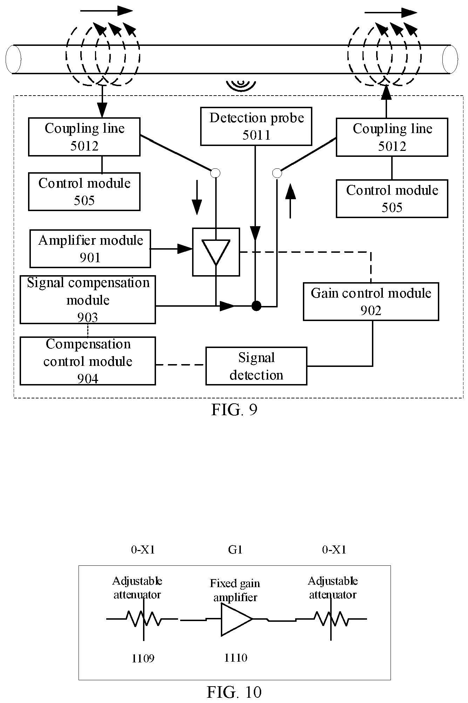

In an exemplary example, FIG. 9 is a schematic block diagram showing component structure of a second processing module according to the present application. As shown in FIG. 9, in addition to a coupling line 5012, a control module 505 and a detection probe 5011 present in pair with the second processing module, the second processing module 503 configured to perform amplification, such as feature compensation and amplitude gain, on a signal of an in-wire transmission mode may include: an amplifier module 901 configured to amplify a signal and a corresponding gain control module 902, a signal compensation module 903 configured to compensate a signal and a corresponding compensation control module 904. The gain control module and the compensation control module correspondingly adjust the total gain of the amplifier module and the related parameters of the signal compensation module according to the signal feature detected by the detection probe in the single wire transmission signal, so as to ensure that the acquired single wire transmission signals are processed to have consistent features before being fed into the single wire transmission line for transmission.

In order to reduce the cost of the entire signal processing apparatus, in an exemplary example, as shown in FIG. 10, the amplifier module in the second processing module of the signal processing apparatus of the present application may include: two adjustable attenuators and a fixed gain amplifier, i.e., a first adjustable attenuator and a second adjustable attenuator are respectively connected to two ends of the fixed gain amplifier. In this manner, the gain control module may be used to control an attenuation value of the adjustable attenuators, and thus control a total gain of the whole amplifier module. For example, as shown in FIG. 10, when the gain of the fixed gain amplifier is G1, and the attenuation value of the adjustable attenuator is in a range of 0 to X1, the total gain of the whole amplifier module is controlled in a range of G1 to G1-2^{∗}X1.

In an exemplary example, the signal compensation module may include, but is not limited to, the following functions: channel flatness compensation, increased out-of-band rejection, etc.

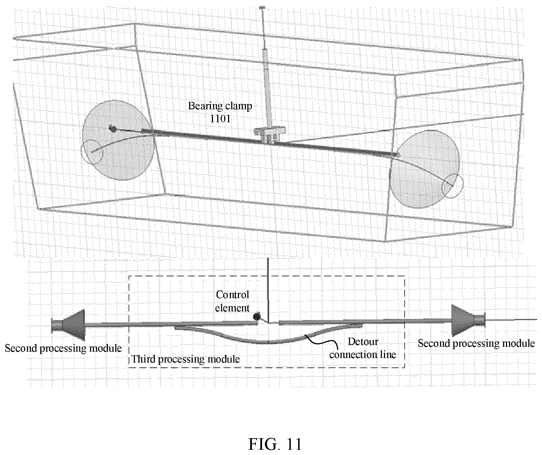

In an exemplary example, FIG. 11 is a schematic diagram showing component structure of a third processing module according to the present application. As shown in FIG. 11, the third processing module is configured to avoid and detour a small obstacle and does not process a signal in principle, which is equivalent to a process of performing "coupling and re-feeding" on the acquired single wire transmission signal.

The inventor of the present application has found in researches that, on a traveling cable such as a single wire transmission line, there are some obstacles that may affect transmission of surface wave signals and are relatively fixed in position, and due to the characteristic that the surface wave is transmitted near a surface of the cable, such obstacles close to or directly contacting the cable will interfere with the transmission characteristics. FIG. 11 is a schematic diagram of a third processing module according to the present application. As shown in FIG. 11, the third processing module may include a control element such as a switch and a detour connection line. The control element is configured to control disconnection of a transmission line of the single wire transmission signal, and the detour connection line is configured to carry the single wire transmission signal and keep transmission. Taking an obstacle being a bearing clamp 1101 as an example, before the signal encounters the bearing clamp 1101, the single wire transmission signal is acquired from the single wire transmission line by coupling and the switch is controlled to close so that direct transmission is performed through the detour connection line, and after the single wire transmission signal has bypassed the obstacle, the single wire transmission signal is fed into the single wire transmission line again by coupling to continue the transmission. Before or after the signal detour, it is possible to perform amplification/compensation on the signal by the second processing module. It should be noted that how to specifically implement the control is easy for those skilled in the art based on the detour example provided in the present application, which is not used to limit the protection scope of the present application, and details are not described here.

The inventor of the present application finds in simulations that when the signal does not pass through an obstacle avoidance device including the third processing module, a loss generated by the obstacle is about 7 to 8 dB, which is already far larger than a loss of 4dB/km equivalent to a transmission loss of 2km, generated when the surface wave is transmitted in the traveling cable under an ideal condition. Moreover, such obstacles are fixed in position and frequently occur, so an obstacle avoidance device with a fixed position is needed to detour signals; however, with the detour of the present application, only about 1dB of loss is generated. That is to say, with the simple detour structure of the present application that detours the acquired single wire transmission signal at a small obstacle, the transmission effect of the signal is obviously improved.

In an exemplary example, in addition to the detour structure shown in FIG. 11, a coupling adaptation device may be further added between two sections of coupling lines, and a matching processing device may be added between an intermediate connection line and the coupling device. Alternatively, connection lines with lower loss and the like may be used. All of these contribute to effectively improving the performance of the entire detour processing.

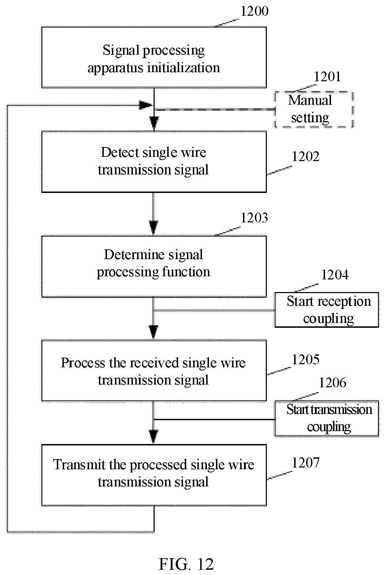

In an exemplary example, FIG. 12 is a schematic diagram showing a signal scheduling module implementing scheduling according to the present application. As shown in FIG. 12, the scheduling may include the following steps 1200 to 1207.

At step 1200, starting the signal processing apparatus of the present application.

At step 1201, setting manually. This step is optional.

Through the manual setting of this step, the signal processing apparatus of the present application may be set to work in a function including any one of signal conversion, signal amplification, and signal detour. The manual setting can save a process of switching functions after signal detection when the signal processing apparatus of the present application is used for the first time.

For example, the signal processing apparatus at a head or tail base station may be set to the signal conversion function by manual setting. That is, at this time, the coupling module, the first processing module, the scheduling module, and the control module in the signal processing apparatus of the present application are in an operating state. If the signal processing apparatus is fixedly configured to implement the switching from the original signal mode to the in-wire transmission mode in this case, the scheduling module may be further set to a non-operating mode.

For another example, at a fixed obstacle previously investigated and known, such as the above bearing clamp, an initial operating state of the signal processing apparatus may be set to the signal detour function by manual setting, so that the signal makes a detour at the obstacle to be further transmitted.

At steps 1202 to 1203, detecting the single wire transmission signal after the signal processing apparatus of the present application is started, and determining a corresponding signal processing function according to the detected signal feature.

If the step 1201 is omitted, then these steps include determining a corresponding signal processing function according to the detected signal feature, and setting a work module of the signal processing apparatus. If the step 1201 has been executed, then these steps include determining a corresponding signal processing function according to the detected signal feature, and switching to the corresponding work module as needed.

In an exemplary example, signal feature information of the single wire transmission signal may be obtained according to the acquired single wire transmission signal. The signal feature information includes, for example, a transmission mode (e.g., a transmission mode of the single wire transmission signal supporting transmission in a single wire transmission line, or a transmission mode of the communication signal at the communication node), a standing-wave ratio, signal amplitude, channel flatness, out-of-band rejection, etc.

In an exemplary example, when a power or signal feature (e.g., amplitude) of the acquired single wire transmission signal does not meet a preset requirement, for example, when the amplitude of the signal is lower than a set amplitude threshold, a function module configured to perform signal amplification is set to an operating mode to amplify the acquired single wire transmission signal, so as to ensure that the feature of the single wire transmission signal in the single wire transmission line keep consistent.

In an exemplary example, when a strong reflection signal is detected in the single wire transmission signal, i.e., when the standing wave is poor, it can be determined that there is an obstacle blocking transmission of the signal, so a function module configured to perform signal detour is set to an operating mode so that the acquired single wire transmission signal makes a detour to be transmitted through a preset communication path, which is equivalent to a process of "coupling and re-feeding".

In an exemplary example, the step may further include: receiving, when a large obstacle or a source communication signal fault occurs, for example, a source communication signal of the head communication node or the tail communication node has a fault or a large-scale cutoff occurs in the single wire transmission line, a communication signal from a nearby or standby communication node, converting the received communication signal into a single wire transmission signal supporting transmission in a single wire transmission line, and coupling the single wire transmission signal to a single wire transmission line for transmission. In this manner, a nearby or standby communication node is conveniently utilized to carry out emergency handling and large-scale obstacle avoidance regarding large obstacles or source communication signal faults, thereby ensuring reliability of the single wire transmission signal.

At step 1204, starting reception coupling to receive the single wire transmission signal in the traveling cable into the signal processing apparatus of the present application for signal processing.

At step 1205, processing the received single wire transmission signal according to a determined processing mode.

At step 1206, starting transmission coupling to feed the processed single wire transmission signal into the traveling cable again for transmission.

After the above signal processing is completed, the process returns to steps 1202 and 1203 to continuously perform feature detection on the single wire transmission signal, so as to adjust the operating mode of the signal processing apparatus in time, and to better ensure the quality of the single wire transmission signal transmitted in the traveling cable.

In an exemplary example, the control module, configured to control operation of the corresponding processing module according to a notification from the scheduling module, is further configured to control coupling information, such as a coupling degree, of the coupling module. As shown in FIG. 5, the coupling degree of the coupling module is controlled by controlling the relative distance, angle, etc. between the coupling line and the single wire transmission line. In an exemplary example, the simplest way is to adjust the coupling degree of the entire coupling module by adjusting a length of the telescopic rod 5013 in FIG. 5.

It should be noted that, the control module may control a switching of different signal processing function modules in various forms, including but not limited to: mechanical switching, electrical switching, logical switching, and the like. There are various specific implementation manners, which are not used to limit the protection scope of the present application, and are not elaborated herein.

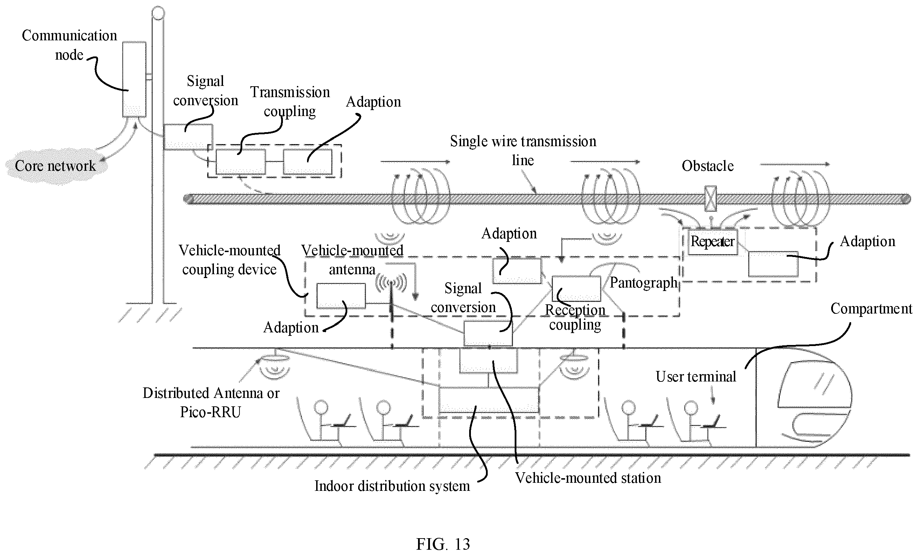

FIG. 13 is a schematic diagram of a signal processing apparatus according to the present application applied in a high-speed train scenario. As shown in FIG. 13, a core network, which may be a core network of a relevant operator, is configured to provide the required communication signal. In the present application, the core network may be a network of a single operator or a combination of networks of multiple operators. The communication node is configured to provide the communication signal. The communication node may include a baseband device or a base station device arranged along a train travel route. The communication node includes at least an initial node for transmitting signals and an end node for receiving signals in the signal transmission process. The single wire transmission line is an independent cable and mainly provides a transmission medium for the single wire transmission signal. In an exemplary example, the single wire transmission line includes, but is not limited to: a traditional power line, pure metal line, metal core + dielectric sheath, or pure dielectric line, and the like.

A repeater may be configured for, for example, signal detection, compensation and amplification, and may be further configured for obstacle avoidance and detour of signals. The signal conversion part, the reception/transmission coupling part, the repeater, and the traveling cable correspond to the signal processing apparatus of the present application.

In addition, a vehicle-mounted coupling device is configured to support signal interaction between the train and the traveling cable, and similar to the coupling module in the signal processing apparatus of the present application. The vehicle-mounted coupling device includes a relevant receiving device and an adapting device on the train, where the receiving device may include, for example, a vehicle-mounted antenna, and a coupling device disposed on the vehicle-mounted device close to the traveling cable. The vehicle-mounted coupling device further includes a vehicle-mounted station, and a distributed transceiver device configured to implement coverage configuration and transmitting and receiving of wireless signals. The vehicle-mounted station is mainly configured for configuration of signal coverage within the train. An indoor distributed system is configured to implement signal coverage within a compartment, which may include the main form of, for example, a Distributed Antenna System (DAS), a Pico-Radio Remote Unit (Pico-RRU), a combination of Building Base Band Unit (BBU) + RRU, and the like. A user terminal is a terminal device inside the compartment for receiving communication signals.

A downlink process of signal processing by the wireless signal coverage system of a high-speed train shown in FIG. 13 includes: providing the required communication signals by an operator core network, which signals directly arrive at a communication node on or near the train travel route via an associated connection device. The communication node may include, but is not limited to, a baseband device or a base station device arranged along a train travel route, etc. When receiving by the communication node, the communication signal may, after signal conversion, obtain an in-wire transmission mode supporting transmission in the traveling cable, such as a single-line transmission signal. Then, after matching a line type of the used traveling cable through coupling adaptation, the communication signal is coupled/fed into a transmission medium, i.e., the single-line transmission line in FIG. 13, through an energy transfer component for transmission.

The repeater provided on the single wire transmission line may perform processing, such as conversion between media, repeat, signal detection and amplification, etc. on the transmission signal. For example, when a magnitude of the single wire transmission signal transmitted to the repeater from the single wire transmission line is lower than a preset threshold, an amplifier in the repeater is started, and the acquired single wire transmission signal is amplified before being fed into the single wire transmission line to continue the transmission along the line. For another example, when the single wire transmission signal detected on the repeater is poor in quality or is interrupted, the associated compensation/detour processing is started.

While the train is moving, the signal is received and coupled from the single wire transmission line through the vehicle-mounted coupling device. Here, the coupling information, such as the coupling degree, may be set according to actual application requirements through the adaptation processing, to determine the amount of coupling energy, while other non-received single wire transmission signals continue to be transmitted along the single wire transmission line to be used for other trains. After receiving the signals, the vehicle-mounted coupling device converts the single wire transmission information of the in-wire transmission mode into an original signal mode.

After the signals reach the vehicle-mounted station in a compartment and are configured for signal coverage, a distributed transceiver system is used for distributing the signals to each carriage for coverage, so that the signals can be received by the user terminal held by a passenger.

An uplink process of signal processing by the wireless signal coverage system of the high-speed train shown in FIG. 13 includes: sending and uploading signal from the user terminal held by the passenger, receiving the signal uploaded by the user with the distributed transceiver system in the compartment, and after the signal is transmitted to the vehicle-mounted station responsible for signal configuration, converting the signal into the in-wire transmission mode supporting transmission in the single wire transmission line to get ready for subsequent uploading. Relevant parameters of the vehicle-mounted coupling device is adapted and configured to match the line type of the used traveling cable. The converted single wire transmission signal of the in-wire transmission mode is coupled/fed into a transmission medium, i.e., the single wire transmission line in FIG. 13, through the vehicle-mounted energy transfer component for transmission.

The repeater provided on the single wire transmission line may perform processing, such as conversion between media, repeat, signal detection and amplification, etc. on the transmission signal. After conversion, the single wire transmission signal is converted from the in-wire transmission mode to the original signal mode, and reaches the communication node through a transmission line, where the signal is uploaded to the core network for further processing. Likewise, the coupling information, e.g., the coupling degree, and the matching condition may be adjusted here according to the actual application requirements through the adaptation processing.

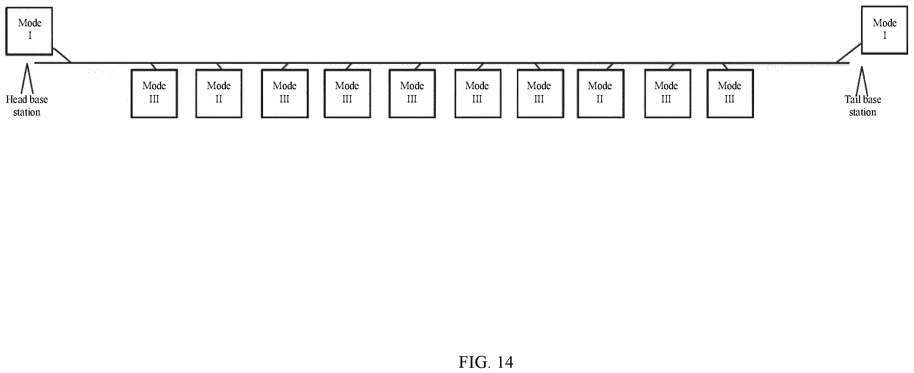

According to an implementation of the signal processing of the present application, on the transmission path, on one hand, a mode of traveling cable plus repeater is adopted to replace air transmitted electromagnetic wave signals; and on the other hand, surface wave transmission (SWT) is applied for transferring signals. As can be seen from FIG. 13, there are three main functions of the repeater in the above application scenario. FIG. 14 shows different operating modes of the repeater provided on the single wire transmission line, where mode I represents the conversion function between the original signal mode and the in-wire transmission mode; mode II represents the detour and obstacle avoidance function of the single wire transmission signal in the single wire transmission line; and mode III represents repeat and amplification of the single wire transmission signal in the single wire transmission line, so that the transmission signal in the cable keeps certain strength and signal feature and thus is received by the vehicle-mounted device. It should be noted that, in FIG. 14, the coupling processing module for the signal in the transmission line is omitted in corresponding positions of different modes. As shown in FIG. 14, the repeater and coupling device in mode I may be provided at a head base station and a tail base station. Taking an amplifier having a gain of 40dB as an example, with a given total transmission loss of 10dB/km. the repeater and the coupling device of mode III with an amplification and compensation function may be arranged every 4 Km. In contrast, the repeater and the coupling device of mode II may be arranged at a place which is investigated in advance and has an obstacle requiring signal detour.

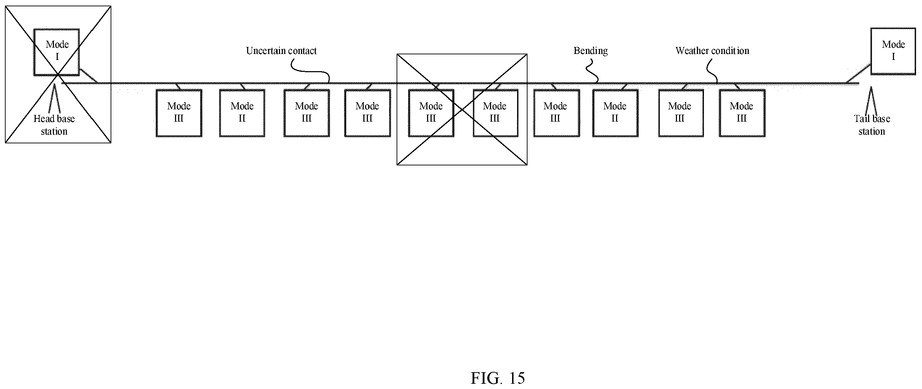

In practical applications, there are many reasons that may cause the whole system to be operated at risk. As shown in FIG. 15, for example, there may be a base station fault causing signal cutoff, bending of the transmission line, bad weather affecting the transmission quality, and other uncertain factors. If the repeaters shown in FIG. 15 all have a scheduling function, that is, the scheduling module having a scheduling function shown in FIG. 4, switching of different operating modes of the repeaters can be better achieved to adapt to risks on the transmission lines, thereby better ensuring the quality of the transmission signal.

The present application will be described in detail below with reference to specific implementations.

The first implementation is a method for implementing signal processing by a signal processing apparatus applied to a high-speed train wireless coverage system.

In the first implementation, a small obstacle detour strategy includes: providing a repeater coupler (including a repeater and a coupling device) at a common obstacle point with a relatively fixed position on a traveling cable, and presetting an operating mode to a detour mode, i.e., mode II. Major obstacle points may include, for example, bearing clamps, cable transition nodes, and the like. In this implementation, it is assumed that a detour loss is added to a total loss of the signal transmitted over the traveling cable and used for guiding setting of the repeater coupler in an amplification operating mode.

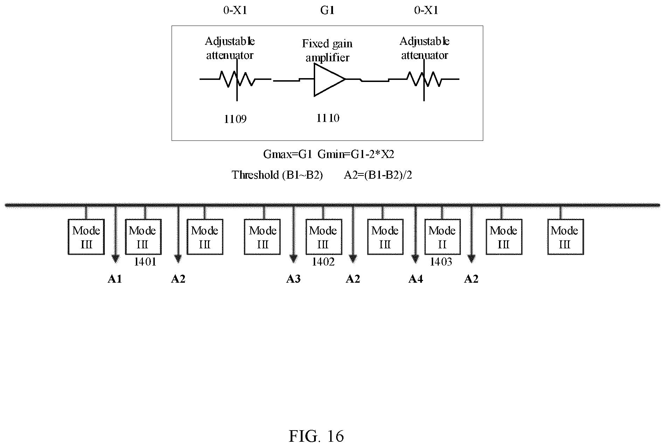

FIG. 16 is a schematic diagram showing an amplifier implementing signal processing according to the present application. In the first implementation, a strategy for setting an amplifier includes: taking a fixed amplifier having a gain of 40dB as an example and calculating based on a transmission loss of 10dB/km, ensuring that at least one repeater coupler in the amplification/compensation operating mode, i.e., mode III, is provided every 4Km. As shown in FIG. 16, a gain control feature includes: fixing a gain of the amplifier, and controlling a gain of the entire amplifier by adjustable attenuators at both ends. For example, if the gain of the amplifier is G1, and the maximum attenuation amplitude of the adjustable attenuators at the both sides is X1, then the gain of the entire amplifier is in the range of G1-2^{∗}X1 to G1. In this implementation, assuming that the signal amplitude threshold is set to a range of B1 to B2, when the repeater coupler on the traveling cable detects signal amplitude smaller than the minimum amplitude threshold B1, the repeater coupler is switched to the amplification operating mode, i.e., mode III; and when the repeater coupler in mode III detects an input signal greater than the maximum amplitude threshold B2, the amplifier gain is adjusted. In this manner, it is better ensured that the signal amplitude at an output end of each repeater coupler in the amplification/compensation mode keeps consistent. For example, as shown in FIG. 16, if the minimum value of the signal amplitude threshold is B1 and the maximum value of the signal amplitude threshold is B2, then the signal amplitude at the output end of the repeater coupler is A2= (B2-B1)/2. As shown in FIG. 16, assuming that there are two repeater couplers 1401 and 1402 in mode III, the input signal amplitudes, i.e., A1 and A3, respectively, are different, but the output ends thereof are gain-controlled to have the same output signal amplitude A2. If the signal amplitude at the end of the device cannot reach A2 even if the maximum gain G1 of the amplifier is reached, before the signal continues to be transmitted to a next repeater coupler (which is usually a detour device because the device in the detour and obstacle avoidance mode is much larger than that in the amplification mode), the current repeater coupler is switched from the current operating mode to mode III to continue amplify the signal. For example, for the repeater coupler 1403 in the detour mode II in FIG. 16, when the signal amplitude A4 is detected to be smaller than the set amplitude threshold, it is automatically switched to mode III to implement amplification of the signal, and the gain of the amplifier in the repeater coupler is controlled to A2 to A4 at this time.

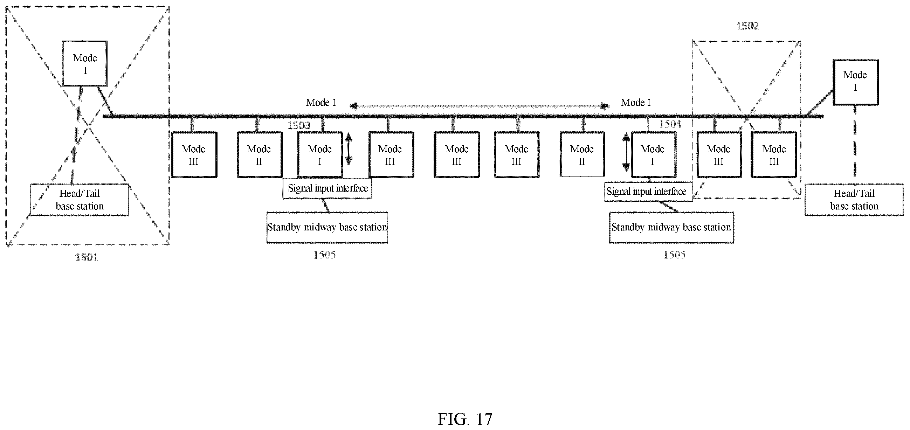

FIG. 17 is a schematic diagram showing emergency handling of a large obstacle detour or source signal fault according to the present application. A large obstacle detour or source signal fault strategy includes: if the source signal of the head or tail base station has a fault 1501 or a large-scale cutoff 1502 occurs in the traveling cable en route, using a repeater coupler 1503 and a repeater coupler 1504 operated in mode I, and a nearby source signal 1505 to acquire base station signals, so as to perform emergency handling and large-scale obstacle avoidance. As shown in FIG. 17, signals of a midway base station 1505 may be conveniently input into the repeater coupler via a signal input interface of any signal processing apparatus along the transmission line, and, after being converted from original signals to single wire transmission signals of the in-wire transmission mode through the conversion function, fed into the single wire transmission line for transmission.

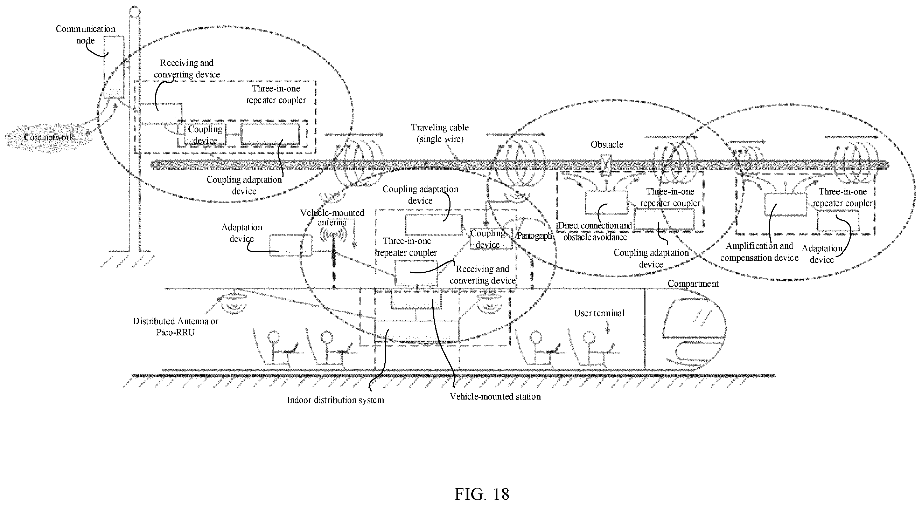

It should be noted that the signal processing apparatus of the present application may be configured according to different practical application scenarios. For example, for a high-density and high-stability scenario in a special environment which is difficult to maintain, a configuration of a low-gain and high-density fixed amplification mode may be adopted. Further, standby stations may be appropriately added along the route. For another example, for a general scenario, the amplifier has a common gain and a recommended arrangement density. Further, several emergency stations may be provided along the route. For another example, for a scenario with a stable environment, the amplifier may be set to have a higher gain and a lower arrangement density to adapt to the scenario with a stable environment in which the disturbance on signal transmission is less, the signal attenuation and feature conditions are relatively stable, and maintenance is relatively simple, thereby reducing the cost. FIG. 18 is a schematic diagram of a specific application layout of the signal processing apparatus according to the present application. As shown in FIG. 18, the dashed circles indicate four application modes of the signal processing apparatus of the present application, i.e., the three-in-one repeater couplers of FIG. 18, in the applied system. For the description of the other parts of FIG. 18, reference may be made to the description of FIG. 13, which is not repeated here.

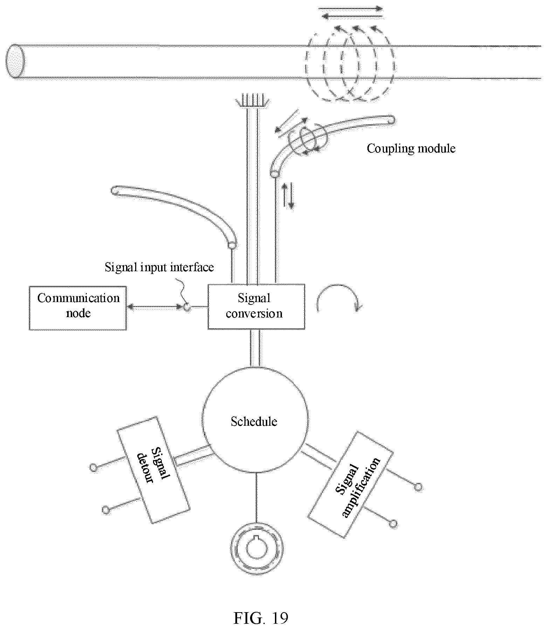

FIG. 19 is a schematic diagram of a second implementation of the signal processing apparatus according to the present application. In the second implementation, as shown in FIG. 19, the signal processing apparatus of the present application is located between a communication node at a head or tail base station or a standby base station and the traveling cable, and is configured to implement the conversion of signal modes and transfer of the energy.

As shown in FIG. 19, the signal processing apparatus receives a signal from the communication node at the head or tail base station or standby base station via a signal input interface, converts a signal source base station signal of an original signal mode into a single wire transmission signal of an in-wire transmission mode through a signal conversion part, and couples the single wire transmission signal into a single wire transmission line through a coupling module for transmission. In this implementation, a first processing module of the function modules in the signal processing apparatus of the present application, i.e., the module implementing the signal conversion function, is in an operating state, while a third processing module for implementing detour, i.e., direct connection and obstacle avoidance, and a second processing module for implementing amplification/compensation are in a standby state. In this implementation, since the signal is input from a signal input port, the reception coupling part in the coupling module shown in FIG. 19 is in a non-operating state, while the transmission coupling part is in an operating state and adjusts the coupling degree and the standing wave according to the signal feature of the single wire transmission signal under an action of scheduling and control, so as to achieve good signal transmission. For the upload signal fed back from a terminal device, the single wire transmission signal of the in-wire transmission mode is converted into the signal source base station signal of the original signal mode through an inverse signal conversion process, and then transmitted to the signal source base station. The specific implementation is easy based on the above description and thus is not described in detail here.

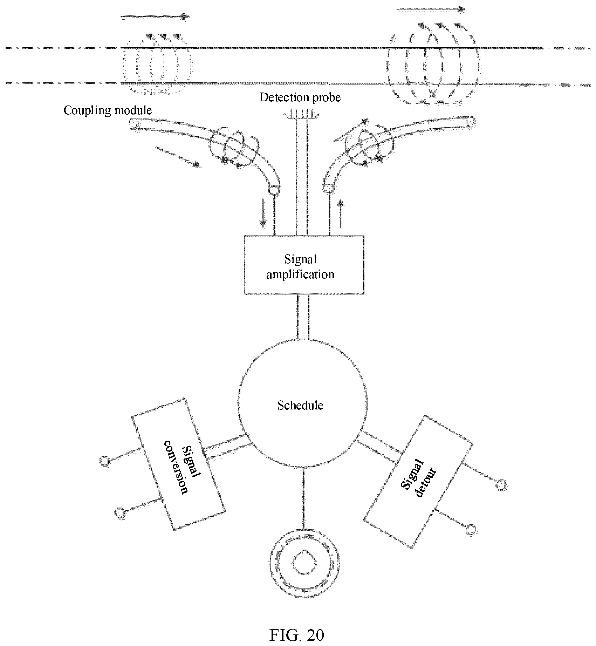

FIG. 20 is a schematic diagram of a third implementation of the signal processing apparatus according to the present application. The third implementation is explained taking the signal processing apparatus of the present application located on a traveling cable and configured to implement signal monitoring, amplification and compensation as an example.

As shown in FIG. 20, when the signal processing apparatus is in a preset signal amplification operating mode, or a detection probe detects that an amplitude or a model feature of the single wire transmission signal transmitted in the traveling cable does not meet a preset requirement, the signal processing apparatus is set to an operating mode of signal amplification, where the single wire transmission signal transmitted in the traveling cable is received by a reception coupling part of the coupling module, processed by the second processing module for amplification/compensation, and then coupled into the single wire transmission line through the coupling module for transmission. In this implementation, the first processing module of the function modules in the signal processing apparatus of the present application, i.e., the module implementing the signal conversion function, and the third processing module for implementing detour, i.e., direct connection and obstacle avoidance, are in a standby state. Further, in this implementation, a coupling degree of an output coupling end of the coupling module may be adjusted so that signals can be normally fed into the traveling cable for transmission. The detection probe will continuously detect the single wire transmission signal transmitted in the traveling cable.

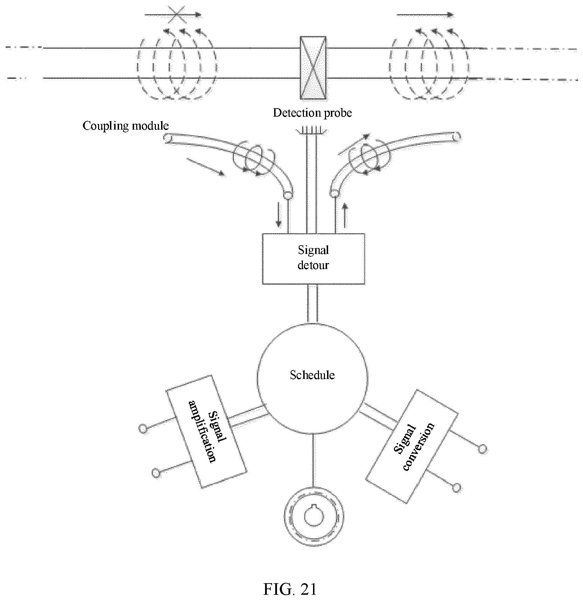

FIG. 21 is a schematic diagram of a fourth implementation of the signal processing apparatus according to the present application. In the fourth implementation, as shown in FIG. 21, this implementation is explained taking the signal processing apparatus of the present application located at a small fixed obstacle on the traveling cable or a position where poor standing waves are detected by the detection device, and configured to implement signal obstacle avoidance and detour as an example.

As shown in FIG. 21, when the apparatus is provided at a fixed obstacle and preset to the signal detour function, or the detection probe detects a strong reflection signal on the traveling cable, that is, a poor standing wave that cannot meet a normal transmission requirement, the signal processing apparatus is in an operating mode of signal detour. The single wire transmission signal transmitted in the traveling cable is received by a reception coupling part of the coupling module, signal transmission is performed through the third processing module for implementing detour, i.e., direct connection and obstacle avoidance, and then the single wire transmission signal is coupled into the single wire transmission line through the coupling module for transmission, where the feature of the signal is not processed in principle. In this implementation, the first processing module of the function modules in the signal processing apparatus of the present application, i.e., the module implementing the signal conversion function, and the second processing module for implementing signal amplification/compensation are in a standby state. Further, in this implementation, a coupling degree of an output coupling end of the coupling module may be adjusted so that signals can be normally fed into the traveling cable for transmission. The detection probe will continuously detect the single wire transmission signal transmitted in the traveling cable.

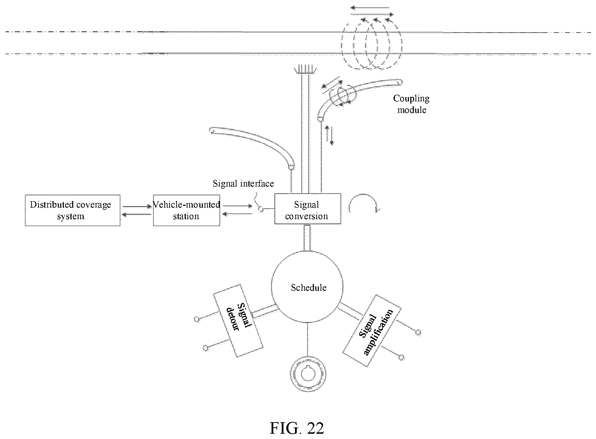

FIG. 22 is a schematic diagram of a fifth implementation of the signal processing apparatus according to the present application. As shown in FIG. 22, in the fifth implementation, the signal processing apparatus of the present application is located between the traveling cable and a vehicle-mounted station of a train, and configured to implement the conversion of signal modes.

As shown in FIG. 22, the signal processing apparatus is set to the signal conversion function, that is, in the signal processing apparatus, the first processing module configured to implement the conversion of signal modes is in an operating state, while the third processing module for implementing detour, i.e., direct connection and obstacle avoidance, and the second processing module for implementing amplification/compensation are in a non-operating state. The fifth implementation is a reverse function of the first implementation, i.e., receiving the single wire transmission signal transmitted in the single wire transmission line by a reception coupling part of the coupling module, converting the single wire transmission signal of the in-wire transmission mode into a signal of the original signal mode by the signal conversion part; and after the signal conversion, transmitting the converted signal transmitted to the vehicle-mounted station via a signal port of the conversion processing module, and performing signal coverage within a compartment by using an indoor distributed coverage system in the compartment. For the signal uploaded by a user terminal in the compartment, it will be converted from a signal source base station signal of the original signal mode into a single wire transmission signal of the in-wire transmission mode through an inverse signal conversion process, and then fed into the single wire transmission line through the transmission coupling part of the coupling module. The specific implementation is easy based on the above description and thus is not described in detail here.

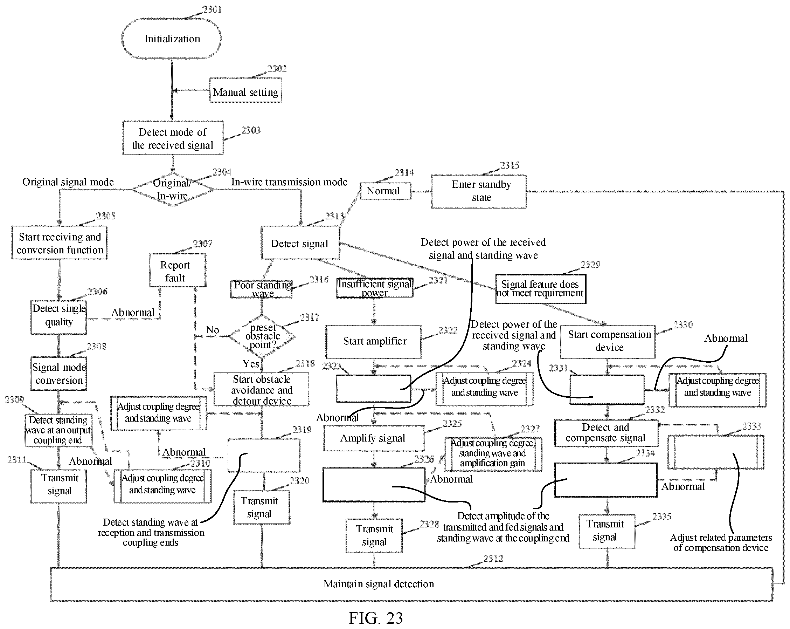

FIG. 23 is a schematic diagram of the signal processing apparatus according to the present application. As shown in FIG. 23, the signal processing apparatus of the present application specifically implements the process of signal processing through the following steps 2301 to 2335.

At step 2301, starting the signal processing apparatus for initialization.

At step 2302, setting manually. The signal processing apparatus of the present application is adjusted work in a function including any one of signal conversion, signal amplification, and signal detour by setting manually. The manual setting can save the process of switching functions after signal detection when the signal processing apparatus of the present application is used for the first time.

For example, the signal processing apparatus at a head or tail base station is set to the signal conversion function by manual setting, and a fixed configuration is to implement a conversion from an original signal mode to an in-wire transmission mode. For another example, at a fixed obstacle such as the bearing clamp described above, the initial operating state of the signal processing apparatus may be set to the signal detour function that detours the signal and avoids the obstacle by manual setting.

At steps 2303 to 2304, detecting the single mode of the signal after the signal processing apparatus of the present application is started, and entering step 2305 when the signaling mode is the original signal mode; and entering step 2313 when the signaling mode is the in-wire transmission mode.

At step 2305, starting the receiving and conversion function when the signal mode is the original signal mode.

At steps 2306 to 2307, detecting the signal. When the detected signal does not meet the preset signal feature, a fault will be actively reported, for example, an abnormal signal from the communication node of the signal source base station, etc. When the signal feature meets the preset signal feature, the process enters step 2308.

At step 2308, performing signal mode conversion on the signal. In this manner, the signal is converted into to the in-wire transmission mode that is suitable for transmission in the traveling cable.

At steps 2309 to 2312, detecting a standing wave at an output (also called "transmission") coupling end of the coupling module, adjusting the same to a proper coupling degree and standing wave, and feeding the converted in-wire transmission signal into the traveling cable. Continuous detection of signal features is maintained.

At step 2313, detecting the signal when the signal mode is the in-wire transmission mode indicating that the signal is qualified for in-wire transmission and that the mode conversion is no longer needed. When the in-wire transmission signal transmitted in the traveling cable meets a preset signal feature, i.e., is normal at step 2314, the process enters step 2315; when the in-wire transmission signal transmitted in the traveling cable does not meet the preset signal feature and the standing wave is poor, the process enters step 2316; when the in-wire transmission signal transmitted in the traveling cable does not meet the preset signal feature and the signal power is insufficient, the process enters step 2321; and when the in-wire transmission signal transmitted in the traveling cable does not meet the preset signal feature, the process enters step 2329.

At step 2315, getting the signal processing apparatus into a standby state in which no function is implemented, and proceeding to step 2312 to maintain the detection of signals.

At step 2316, determining that an obstacle blocking signal transmission is present at the current position of the signal processing apparatus when the standing wave is poor, i.e., a strong reflection signal is detected.

At steps 2317 to 2318, if the determined obstacle does not belong to obstacles found in the previous investigation, i.e., this obstacle point is not manually set, which means that an additional or new obstacle appears on the traveling cable, reporting to notify the signal processing apparatus of a position and a feature of the obstacle at the current position. If the determined obstacle belongs to obstacles found in the previous investigation, the obstacle avoidance and detour function is started to perform signal detour.

Here, the reported obstacle position may be known through a label of the signal processing apparatus, because the position distribution information of the signal processing apparatus is recorded at installation; and the feature of the obstacle may be fed back through logic determination inside the signal processing apparatus. For example, a new obstacle may be considered to be present when the signal processing apparatus not preset with the detour function detects strong reflection information.

The module configured to perform signal detour does not process the signal itself. That is, the signal is directly transmitted through the device, but makes a detour to avoid the obstacle.

At steps 2319 to 2320, coupling the signal back to the traveling cable for transmission after the standing wave detection and adjustment on the reception coupling end and transmission coupling end of the coupling module. Continuous detection of signal features is maintained.

At steps 2321 to 2322, starting an amplifier to compensate the signal in amplitude or feature when an insufficient power of the single wire transmission signal transmitted in the traveling cable is detected. That is, the apparatus switches to operating with a module for implementing the amplification/compensation function.

At steps 2323 to 2328, detecting the power of the received signal and the standing wave of a reception coupling end of the coupling module, adjusting the coupling degree and the standing wave accordingly in an abnormal case to ensure a good standing wave at an input port of the amplifier, and then amplifying the signal. After the signal is amplified by the amplifier, amplitude of the amplified signal is detected, and the standing wave at an output coupling end of the coupling module is detected and adjusted. The purpose of the amplitude detection is to ensure that the amplitude of the signal meets the preset requirement of signal quality, and when the amplitude of the signal is too large or too small, the gain of the entire amplifier module may be controlled by adjusting a value of an adjustable attenuator in the amplifier. When the detected signal meets the amplitude requirement, the standing wave at the output coupling end of the coupling module is adjusted, and then the signal is fed into the traveling cable for transmission. Continuous detection of signal features is maintained.

At step 2329, making compensation to the signal feature if the signal feature does not meet the preset requirement of signal quality. The feature mainly includes, but is not limited to, signal amplitude, channel flatness, out-of-band rejection, etc.

At step 2330, starting a signal compensation function.

At steps 2331 to 2335, implementing the signal compensation in a way similar to implementation of the amplitude compensation, which means adjusting the coupling degree and the standing wave at a reception coupling end of the coupling module before the signal compensation; and after the signal compensation, detecting, on one hand, the signal feature to feedback and adjust parameters related to the compensation; and adjusting, on the other hand, the coupling degree of an output coupling end of the coupling module so that signals can be normally fed into the traveling cable for transmission. Continuous detection of signals is maintained.

It should be noted that the above implementations are described merely taking the signal processing apparatus of the present application applied into a high-speed train scenario as an example, but the present application is not limited thereto. That is, the signal processing apparatus of the present application may also be applied to any other scenario that utilizes SWT to implement signal coverage, such as: a scenario in which communication signals are transmitted through a power line to realize signal coverage of a remote area; for another example: other non-moving scenarios, etc.

The above are only preferred examples of the present application and not intended to limit the scope of the present application. Any amendments, equivalent substitutions, improvements, etc. within the principle of the present application are included in the scope of protection defined by the appended claims of the present application.

## Claims

1. A signal processing apparatus, comprising: a coupling module, a scheduling module, a first processing module, a second processing module, a third processing module and a control module, wherein
the coupling module is configured to acquire a single wire transmission signal and feed the processed single wire transmission signal into a single wire transmission line for transmission;
the scheduling module is configured to determine a processing mode according to the acquired single wire transmission signal and send a notification to the control module to control a corresponding processing module to perform processing;
the first processing module is configured to perform signal conversion on the single wire transmission signal according to the control of the control module;
the second processing module is configured to perform signal amplification on the single wire transmission signal according to the control of the control module;
the third processing module is configured to perform signal detour on the single wire transmission signal according to the control of the control module; and
the control module is configured to control the corresponding processing module according to the notification from the scheduling module.

2. The signal processing apparatus according to claim 1, wherein the scheduling module is configured to:
determine, when a power or signal feature of the acquired single wire transmission signal does not meet a preset requirement, that the processing mode is signal amplification, and send the notification to the control module to control the second processing module;
determine, when a strong reflection signal is detected in the single wire transmission signal, that the processing mode is signal detour, and send the notification to the control module to control the third processing module; and
determine, when the single wire transmission signal reaches a receiving device, that the processing mode is signal conversion, and send the notification to the control module to control the first processing module.

3. The signal processing apparatus according to claim 1, wherein the scheduling module is further configured to:
determine coupling information of the coupling module according to the acquired single wire transmission signal, and notify the control module of the determined coupling information, and
the control module is further configured to:
control the coupling module to adjust the coupling information to the determined coupling information.

4. The signal processing apparatus according to claim 1, wherein the first processing module is further configured to:
convert a communication signal of an original signal mode from a communication node into a single wire transmission signal of an in-wire transmission mode supporting transmission in a single wire transmission line; and
couple the converted single wire transmission signal to a single wire transmission line for transmission.

5. The signal processing apparatus according to claim 1, wherein the first processing module is further configured to:
receive, when a large obstacle or a source communication signal fault occurs, a communication signal from a nearby or standby communication node of the single wire transmission line,
convert the received communication signal into a single wire transmission signal supporting transmission in a single wire transmission line, and
couple the single wire transmission signal to a single wire transmission line for transmission.

6. The signal processing apparatus according to claim 1, wherein the second processing module is configured to:
perform, when a power or signal feature of the acquired single wire transmission signal does not meet a preset requirement, signal amplification or feature compensation on the single wire transmission signal.

7. The signal processing apparatus according to claim 1, wherein the third processing module is configured to:
perform, when a strong reflection signal is detected in the single wire transmission signal, signal detour on the single wire transmission signal, and
detour to transmit the acquired single wire transmission signal through a preset communication path.

8. The signal processing apparatus according to any one of claims 1 to 7, wherein the single wire transmission line comprises a traditional power line, pure metal line, metal core plus dielectric sheath or pure dielectric line.

9. The signal processing apparatus according to any one of claims 1 to 7, wherein the single wire transmission signal comprises a surface wave transmission signal.

10. The signal processing apparatus according to any one of claims 1 to 7, wherein the coupling module comprises:
a detection probe configured to detect a signal feature of the single wire transmission signal transmitted in the single wire transmission line;
a coupling line configured to receive and transmit signals; and
a driving device configured to control the coupling degree and perform standing wave adjustment between the coupling lines.

11. The signal processing apparatus according to any one of claims 1 to 7, wherein the first processing module comprises:
a signal filtering unit configured to filter the converted transmission signal;
a signal input interface configured to receive a communication signal from a communication node; and
a conversion unit configured to convert between a communication signal of an original signal mode and a single wire transmission signal of an in-wire transmission mode.

12. The signal processing apparatus according to claim 11, wherein the conversion unit comprises: a metal horn conversion structure, or a PCB circuit, or a waveguide mode converter.

13. The signal processing apparatus according to any one of claims 1 to 7, wherein the second processing module comprises:
an amplifier module configured to amplify a signal;
a gain control module configured to adjust a total gain of the amplifier module according to the detected signal feature of the single wire transmission signal;
a signal compensation module configured to compensate a signal; and
a compensation control module configured to adjust a parameter of the signal compensation module according to the detected signal feature of the single wire transmission signal.

14. The signal processing apparatus according to claim 13, wherein the amplifier module comprises:
a fixed gain amplifier configured to control an attenuation value of an adjustable attenuator to control the total gain of the entire amplifier module; and
a first adjustable attenuator and a second adjustable attenuator respectively connected to both ends of the fixed gain amplifier.

15. The signal processing apparatus according to any one of claims 1 to 7, wherein the third processing module comprises:
a control element configured to control disconnection of a transmission line of the single wire transmission signal; and
a detour connection line configured to carry the single wire transmission signal and keep transmission.

16. A signal processing apparatus, comprising: a coupling module and a first processing module, wherein
the coupling module is configured to acquire a single wire transmission signal and feed the processed single wire transmission signal into a single wire transmission line for transmission; and
the first processing module is configured to perform signal conversion on the single wire transmission signal; or receive a communication signal from a communication node and perform signal conversion on the received communication signal.

17. The signal processing apparatus of claim 16, further comprising: a scheduling module and a control module, wherein
the scheduling module is configured to determine coupling information of the coupling module according to the acquired single wire transmission signal, and notify the control module of the determined coupling information; and
the control module is configured to control the coupling module to adjust the coupling information to the determined coupling information.

18. A signal processing apparatus, comprising: a coupling module and a second processing module, wherein
the coupling module is configured to acquire a single wire transmission signal and feed the processed single wire transmission signal into a single wire transmission line for transmission; and
the second processing module is configured to perform signal amplification on the single wire transmission signal.

19. The signal processing apparatus of claim 18, further comprising: a scheduling module and a control module, wherein
the scheduling module is configured to determine coupling information of the coupling module according to the acquired single wire transmission signal, and notify the control module of the determined coupling information; and
the control module is configured to control the coupling module to adjust the coupling information to the determined coupling information.

20. A signal processing apparatus, comprising: a coupling module and a third processing module, wherein
the coupling module is configured to acquire a single wire transmission signal; and feed the processed single wire transmission signal into a single wire transmission line for transmission; and
the third processing module is configured to perform signal detour on the single wire transmission signal.

21. The signal processing apparatus of claim 20, further comprising: a scheduling module and a control module, wherein
the scheduling module is configured to determine coupling information of the coupling module according to the acquired single wire transmission signal, and notify the control module of the determined coupling information; and
the control module is configured to control the coupling module to adjust the coupling information to the determined coupling information.

22. A method for implementing signal scheduling, comprising:
determining, in a transmission process of a single wire transmission signal, to perform signal conversion, signal amplification or signal detour on the single wire transmission signal according to the acquired single wire transmission signal.

23. The signal processing method according to claim 22, wherein before acquiring the single wire transmission signal, the method further comprises:
converting a communication signal of an original signal mode from a communication node into the single wire transmission signal of an in-wire transmission mode supporting transmission in a single wire transmission line; and
coupling the single wire transmission signal to a single wire transmission line for transmission.

24. The signal processing method according to claim 23, wherein the step of coupling the single wire transmission signal to the single wire transmission line for transmission comprises:
coupling and adapting the single wire transmission signal to match a line type of the single wire transmission line; and
transmitting the coupled and adapted single wire transmission signal through the single wire transmission line.

25. The signal processing method according to claim 22 or 23, wherein the step of determining to perform signal conversion, signal amplification or signal detour on the single wire transmission signal according to the acquired single wire transmission signal comprises:
determining, when a power or signal feature of the acquired single wire transmission signal does not meet a preset requirement, to perform signal amplification or compensation on the single wire transmission signal;
determining, when a strong reflection signal is detected in the single wire transmission signal, to perform signal detour on the single wire transmission signal and detour to transmit the acquired single wire transmission signal through a preset communication path;
determining, when the single wire transmission signal reaches a receiving device, to perform signal conversion on the single wire transmission signal and convert the single wire transmission signal into a communication signal of an original signal mode; and transmitting the converted communication signal to the receiving device, and performing signal coverage through a signal coverage system to which the receiving device belongs.

26. The signal processing method according to claim 22 or 23, wherein when a large obstacle or a source communication signal fault occurs, the method further comprises:
receiving a communication signal from a nearby or standby communication node of the single wire transmission line,
converting the received communication signal into a single wire transmission signal supporting transmission in a single wire transmission line, and
coupling the single wire transmission signal to a single wire transmission line for transmission.

27. The signal processing method according to claim 22 or 23, wherein before the step of determining to perform signal conversion, signal amplification or signal detour on the single wire transmission signal according to the acquired single wire transmission signal, the method further comprises:
switching, according to a signal feature of the single wire transmission signal, into a processing mode comprising any one of the signal conversion, the signal amplification and the signal detour.
